# EUROPÄISCHE PATENTSCHRIFT

(11) **EP 2 705 739 B1**
(45) Veröffentlichungstag und Bekanntmachung des Hinweises auf die Patenterteilung: **02.12.2015**
(21) Anmeldenummer: 13401092.5
(22) Anmeldetag: 23.08.2013
(51) Int. Cl.: A01B 3/42, A01B 15/04

(54) **Drehpflug**
Reversible plough
Charrue brabant

(30) Priorität: 05.09.2012 DE 102012108236
(43) Veröffentlichungstag der Anmeldung: 12.03.2014
(60) Teilanmeldung: 15150870.2
(73) Patentinhaber: Amazonen-Werke H. Dreyer GmbH & Co. KG, 49205 Hasbergen (DE)
(72) Erfinder: Laumann, Bernhard, 48477 Hörstel - Riesenbeck (DE); Resch, Rainer, 49170 Hagen a TW (DE)

(56) Entgegenhaltungen:
- EP-A1- 0 171 861
- EP-A1- 0 876 746
- DE-A1- 2 240 335
- DE-A1- 19 718 988
- US-A- 3 303 891

## Beschreibung

Die Erfindung bezieht sich auf einen Drehpflug mit einem an einem Anbaubock zur Verbindung des Drehpfluges mit einem landwirtschaftlichen Zugfahrzeug dreh- und/oder schwenkbar befestigbaren Pflugrahmen und mit auf gegenüberliegenden Seiten des Pflugrahmens angeordneten Pflugscharreihen mit Pflugkörpern, wobei durch eine über eine Antriebsvorrichtung eingeleitete Drehbewegung des Pflugrahmens wahlweise die eine oder die andere Pflugscharreihe in ihre Betriebsstellung oder in ihre Außerbetriebsstellung überführbar ist und wobei die Pflugkörper über Pflugkörperhalterungen an dem Pflugrahmen befestigt sind.

Drehpflüge mit an gegenüberliegenden Seiten eines Pflugrahmens angeordneten Pflugscharreihen haben Pflugscharreihen, die auf der einer Seite rechtswendende Pflugkörper und auf der anderen Seite linkswendende Pflugkörper aufweisen, die jeweils wechselseitig bei einer Hinfahrt und bei einer Rückfahrt zum Einsatz kommen. Durch eine Antriebsvorrichtung, beispielsweise in Gestalt eines Drehzylinders, ist der Pflug in die jeweilige Arbeitsstellung zu überführen. Für eine Arbeitsbreiteneinstellung kann darüber hinaus der Drehpflug mit einer besonderen Vorrichtung ausgerüstet sein, um in der jeweiligen Arbeitsstellung die Pflugarbeitsbreite anpassen zu können.

Üblicherweise sind die Pflugkörperhalterungen an der Unter- und an der Oberseite des Pflugrahmens des Drehpfluges befestigt. Ein Beispiel dazu ist der aus der DE 197 18 988 A1 bekannte Pflug, bei dem die Pflugkörper über Klemmplatten am Pflugrahmen festzulegen sind. Die Klemmplatten bedecken dabei mit einander zugewandten Schenkeln die Ober- und Unterseite des Pflugrahmens und haben nach oben und unten gerichtete Befestigungsansätze, die über Schrauben und Muttern miteinander zu verspannen sind. Dadurch werden die Klemmkräfte auf den Pflugrahmen übertragen. Die abgewinkelten Schenkel mit ihren empor bzw. während der Arbeitsstellung des Pfluges zur Bodenoberfläche hin gerichteten Befestigungsansätzen sowie die Klemmschrauben beeinträchtigen den Raum oberhalb und unterhalb des Pflugrahmens während des Arbeitseinsatzes erheblich. Ein derartiger Pflug neigt daher zu Verstopfungen, die durch diese Pflugkörperhalterungen ausgelöst werden können.

Durch die EP017861 A1 ist ebenfalls ein Drehpflug der eingangs genannten Art bekannt. Bei diesem Drehpflug weist der Pflugrahmen in Richtung der Ober- und Unterseite des Pflugrahmens abgekantete Halterungen auf. Diese Halterungen weisen Ausnehmungen auf, durch welche als Schrauben ausgebildete Befestigungselemente gesteckt werden können, mittels denen die Pflugkörper mit dem Pflugrahmen zu verbinden sind.

Des Weiteren ist durch die EP876746A1 ein weiterer Drehpflug bekannt. Hier sind mittels der den Pflugrahmen durchdringenden Schrauben die Pflugkörperhalterungen an dem Pflugrahmen zu befestigen.

Es ist Aufgabe der vorliegenden Erfindung, einen Drehpflug der eingangs genannten Art derart weiter zu bilden, dass Funktionsteile und deren Halterungen sicher an Verbindungselementen zu halten sind, insbesondere mit einem Pflugrahmen zu verbinden sind. Zur Lösung dieser Aufgabe zeichnet sich der Drehpflug der eingangs genannten Art durch die im Anspruch 1 angegebenen Merkmale aus. Durch die Gestaltung des Ansatzelements gemäß Anspruch 1 lässt sich das Ansatzelement lageveränderlich in der entsprechenden Ausnehmung anordnen. Damit lassen sich montagespezifische Gegebenheiten in einfacher Weise berücksichtigen. Ebenfalls lassen sich Fertigungstoleranzen in einfacher Weise ausgleichen. Durch das Ansatzelement ist das anzubauende Teil wie beispielsweise die Pflugkörperhalterung oder ein Halterungsteil eines Anbaubockes an z.B. dem Pflugrahmen zu fixieren.

Erfindungsgemäß weist das Halteteil des Anbaubockes zumindest ein Ansatzelement auf, das formschlüssig in eine komplementär ausgebildete Ausnehmung des Pflugrahmens eingreift. Alternativ kann ein derartiges Ansatzelement auch am Pflugrahmen vorgesehen sein, das in eine entsprechend komplementär ausgebildete Ausnehmung des Halteteils des Anbaubockes eingreift. Darüber hinaus ist das Ansatzelement geeignet, weitere Verbindungselemente wie beispielsweise Schraubverbindungselemente zu entlasten. Es können ein oder mehrere Ansatzelemente vorgesehen sein. Bevorzugter Maßen ist vorgesehen, dass der Anbaubock über ein Halteteil nur an einer Seitenwand oder nur an zwei Seitenwänden des Pflugrahmens in Bezug auf seine Arbeitsstellung befestigt ist Besonders bevorzugt ist, wenn das Halteteil des Anbaubockes mit der einen Seitenwand oder mit zwei Seitenwänden des Pflugrahmens verschraubt wird. Letzteres kann dergestalt erfolgen, dass zumindest eine Schraube oder dergleichen Befestigungsmittel den Pflugrahmen durchsetzt, so dass das Halteteil des Anbaubockes an beiden Seitenwänden des Pflugrahmens angeschlossen ist, ohne dass sich das Halteteil in Bereichen oberhalb oder unterhalb des Pflugrahmens an dortige Wandungsteile anlegt.

Es ist ebenfalls möglich, zwei oder mehr Ansatzelemente an dem Halteteil des Anbaubockes vorzusehen bzw. umgekehrt am Pflugrahmen, die in entsprechende Ausnehmungen eingreifen. Durch dieses Ansatzelement ist zunächst das Halteteil des Anbaubockes am Pflugrahmen zu zentrieren und kann dann über weitere Befestigungselemente, beispielsweise über weitere Schrauben mit dem Pflugrahmen sicher verbunden werden. Durch den Formschluss eines entsprechenden Ansatzelementes in der komplementär ausgebildeten Ausnehmung ergibt sich eine sichere und die Schraubverbindung entlastende Anordnung des Halteteils des Anbaubockes an dem Pflugrahmen, die auch als Widerlager dient und mithin Stoßbelastungen sicher abfängt.

Eine entsprechende Ausbildung und Befestigung ist ebenfalls möglich mit der Pflugkörperhalterung. Auch diese kann sich nur an einer Seitenwand oder an zwei Seitenwänden des Pflugrahmens in Bezug auf seine Arbeitsstellung am Pflugrahmen anschließen, also bei einem üblichen Vierkantpflugrahmen an den beiden Seitenwänden. Somit ist auch der Pflugrahmen in seiner Arbeitsstellung in seinen Bereichen oberhalb seiner oberen Wandung und unterhalb seiner unteren Wandung frei von Befestigungen und Befestigungsansätzen von Pflugkörperhalterungen, womit ein dadurch bedingtes Verstopfungs- und/oder Verschmutzungsrisiko vermindert ist. Die Pflugkörperhalterung kann in analoger Weise ausgebildet sein wie das Halterungsteil des Anbaubockes, also mit einem oder mehreren Ansatzelementen, wie vorbeschrieben und wie in den Ansprüchen angegeben. Das Ansatzelement kann beispielsweise dergestalt ausgebildet sein, dass es ein bewegliches Teil aufweist mit beispielsweise einem endseitigen Konus, der in die Ausnehmung an dem Halterungsteil an Pflugrahmen und/oder der Pflugkörperhalterung eingreift. Damit ist dieses lageveränderlich an der Ausnehmung vorzusehen. Dazu kann beispielsweise eine Art Schraube vorgesehen sein mit einer Mutter, die in ein entsprechendes Gewinde eines Buchsenteils eingreift.

An der Pflugkörperhalterung, insbesondere wenn sie seitlich an dem Pflugrahmen vorgesehen ist, kann sich in besonders vorteilhafter Weise auch eine Vorrichtung zur Einstellung der Pflugarbeitsbreite anschließen, und zwar dergestalt, dass der Pflugkörper um eine im wesentlichen lotrechte Achse schwenkbar am Pflugrahmen über einen eine Ausnehmung des Pflugrahmens durchsetzende Hebel verstellbar ist. Der die Ausnehmung des Pflugrahmens durchsetzende Hebel kann seinerseits beweglich mit zumindest einem Teil der Pflugkörperhalterung verbunden sein. Dazu kann die Pflugkörperhalterung zwei- und mehrteilig ausgebildet sein, beispielsweise mit einem Pflugkörperhalteteil, das - wie vor erwähnt - seitlich an dem Pflugrahmen mit Schrauben und einem formschlüssig in eine Ausnehmung angreifenden Ansatz befestigt ist. An diesem Pflugkörperhalteteil können z.B. Konsolen befestigt werden, zwischen denen eine lotrechte Achse definiert ist, so dass die Konsolen, an denen ein Pflugkörper zu befestigen ist, relativ zu dem an dem Pflugrahmen befestigten Pflugkörperhalteteil bewegt werden können. Das seitlich an den Pflugrahmen angebundene Pflugrahmenhalteteil kann seinerseits eine Ausnehmung, beispielsweise eine schlitzförmige Ausnehmung haben, die zu der Ausnehmung, im Pflugrahmen fluchtet, so dass der Hebel zur Verstellung der Arbeitsbreite nicht nur den Pflugrahmen sondern auch das Pflugrahmenhalteteil durchsetzen kann.

Durch die bewegliche Verbindung des Hebels mit der Pflugkörperhalterung, insbesondere durch die schwenkbewegliche Verbindung und die Verschwenkbarkeit um eine im wesentlichen horitzontale Achse, können weiterhin wirksam Stöße aufgefangen werden, um die Verschleißanfälligkeit des Pfluges weiter zu vermindern. Weitere Vorteile und Ausgestaltungen der Erfindung ergeben sich aus weiteren Unteransprüchen, der nachstehenden Beschreibung und der Zeichnung. In der Zeichnung zeigen:
- Fig. 1: eine schematische Seitenansicht auf ein Ausführungsbeispiel eines Drehpfluges nach der Erfindung;
- Fig. 2: ausschnittsweise in perspektivischer Darstellung einen Teilbereich des Pflugrahmens mit angedeuteter Pflugschar;
- Fig. 3: eine zu Fig. 2 analoge Darstellung aus einer anderen mehr von oben ausgerichteten Perspektive;
- Fig. 4: ein Teilausschnitt einer perspektivischen Darstellung auf den Pflugrahmen mit Pflugkörperhalterung (ohne Pflugschar);
- Fig. 5: eine perspektivische Darstellung schräg von oben auf das Ausführungsbeispiel nach Fig. 4 mit angedeutetem Pflugschar;
- Fig. 6: eine zu Fig. 5 analoge Darstellung,
- Fig. 7: eine Darstellung eines Teilbereich des Pflugrahmens in einer Ansicht schräg von oben;
- Fig. 8: eine Seitenansicht auf die Pflugkörperhalterung von der dem Pflugschar abgewandten Seite;
- Fig. 9: einen Teilausschnitt einer perspektivischen Darstellung eines Ausführungsbeispiels auf einen Drehpflug im Bereich der Anbindung des Pflugrahmens an dem Anbaubock für die Verbindung mit einem landwirtschaftlichen Zugfahrzeug;
- Fig. 10: vergrößert den Bereich des seitlich am Pflugrahmen angebauten Halterungsteiles des Anbaubockes;
- Fig. 11: eine zu Fig. 10 analoge Dastellung des Anbauteiles des Ausführungsbeispiels nach den Fig. 9 und 10 vor der Montage;
- Fig. 12: eine zu Fig. 11 analoge Darstellung von der gegenüberliegenden Seite betrachtet vor der Montage an dem Pflugrahmen, und
- Fig. 13: ein Ausführungsbeispiel eines verstellbar ausgebildeten Ansatzelements des Halterungsteiles oder des Pflugkörperhalteteils, das in eine entsprechende Ausnehmung innerhalb des Pflugrahmens einzusetzen ist.

In der Zeichnung sind grundsätzlich übereinstimmende Teile mit übereinstimmenden Bezugsziffern versehen.

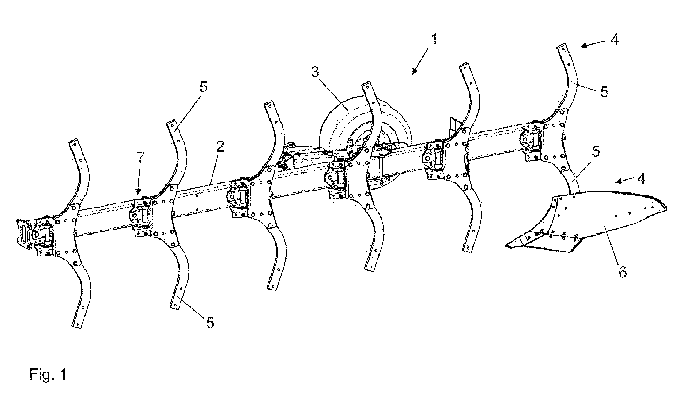

In Fig. 1 ist ein Ausführungsbeispiel eines allgemein mit 1 bezifferten Drehpfluges gezeigt, der über eine nicht im Einzelnen dargestellten Anbaubock an einen ebenfalls nicht im Einzelnen näher dargestellten landwirtschaftlichen Schlepper anhängbar ist und der einen Pflugrahmen 2 aufweist, der über ein Stützrad 3 auf dem Erdboden abzustützen ist. Der Pflugrahmen 2 trägt allgemein mit 4 bezifferte gegenüberliegende Pflugscharreihen mit am Pflugarmen 5 angeordneten Pflugkörpern 6, die gegenüberliegend an den Pflugrahmen 2 angeordnet sind. In dem Ausführungsbeispiel nach Fig. 1 ist nur ein Pflugkörper 6 angedeutet.

In der Darstellung nach Fig. 1 sind die unteren Pflugkörper 6 einer Pflugscharreihe 4 in der Arbeitsstellung. Durch eine Bewegung um 180° kann der Pflugrahmen 2 gedreht werden, so dass die gegenüberliegende Pflugscharreihe 4 mit daran montierten Pflugkörpern 6 in die Arbeitsstellung gelangen. Die dazu erforderlichen Teile wie Drehwelle, Zylindereinheiten sind aus Gründen der besseren Übersichtlichkeit nicht dargestellt.

Die Pflugkörper 6 und mithin die Pflugscharreihen 4 sind über die Pflugarme 5 an einer allgemein mit 7 bezifferten Pflugkörperhalterung an dem Pflugrahmen 2 befestigt. Wie im Einzelnen anhand weiterer Figuren noch dargestellt wird, ist die Pflugkörperhalterung 7 bei dem gezeigten Ausführungsbeispiel mehrteilig ausgebildet, und zwar dergestalt, dass sie den oberen Bereich des Pflugrahmens 2 genauso wie den unteren Bereich des Pflugrahmens 2 freilässt und sich nur an seitlichen in Fig. 1 dem Betrachter zugewandten Bereichen des Pflugrahmens 2 anschließt. Damit gehen im Alltagsbetrieb erhebliche Vorteile einher, da insbesondere die Pflugrahmenoberseite frei von Anbauten gestaltet ist mit erheblichen Vorteilen im rauhen Alltagseinsatz.

Wie im Einzelnen noch näher erläutert werden wird, sind die Pflugarme 5 mit den Pflugkörpern 6 um eine lotrechte Achse verschwenkbar und auch hinsichtlich ihrer Arbeitsbreite zu verstellen. Dies wird anhand der weiteren Darstellungen näher erläutert werden.

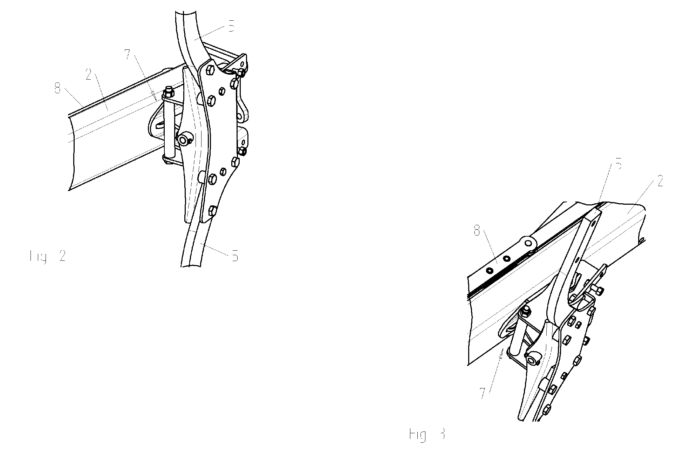

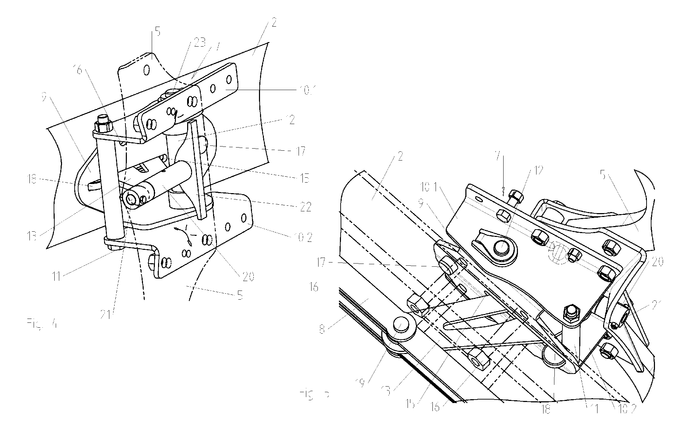

Wie die Fig. 2 und 3 zeigen, sind die Pflugkörper 6 und damit die Pflugscharreihen 4 und 5 über die Pflugkörperhalterung 7 an dem Pflugrahmen 2 befestigt. Fig. 3 zeigt, dass eine Verstellstange 8 seitlich neben dem Pflugrahmen 2 vorgesehen ist, um mithilfe von nicht gezeigten Stellzylindern die Arbeitsbreite des Pfluges 1 über eine Verstellung und damit um eine Verschwenkung der Pflugscharreihen 4 mit angeordneten Pflugkörpern 6 einzustellen. Die Pflugscharreihen bzw. die entsprechenden Halter 7 der Pflugkörper 6 sind über eine Befestigungsplatte mit der Pflugkörperhalterung 7 verschraubt. Die entsprechenden Teile sind näher aus den Fig. 4, 5 und 6 ersichtlich. Die Pflugkörperhalterung 7 besteht in dem dargestellten Ausführungsbeispiel aus mehreren Teilen, nämlich zunächst dem Pflugkörperhalteteil 9 und zwei mit Abstand zueinander angeordneten Konsolen 10.1 und 10.2, wobei 10.1 die obere Konsole und 10.2 die untere Konsole beziffert. Diese sind gegensinnig abgewinkelt, um dort über Schrauben, die in entsprechende Schraublöcher einzuführen sind, die Befestigungsplatte der Pflugarme 5 der Pflugschare 6anzubinden. Die Konsolen 10.1 und 10.2 sind über eine Schraube 11 und über eine Bolzenhülsenbefestigung 12 miteinander verbunden. Die Bolzenhülsenbefestigung 12 definiert darüber hinaus eine lotrechte Achse, über die die Konsolen mit adaptierten Pflugscharen 4 und 5 relativ zu dem Pflugrahmen 2 zur Verstellung der Arbeitsbreite innerhalb eines vorgegebenen Schwenkweges zu verschwenken sind.

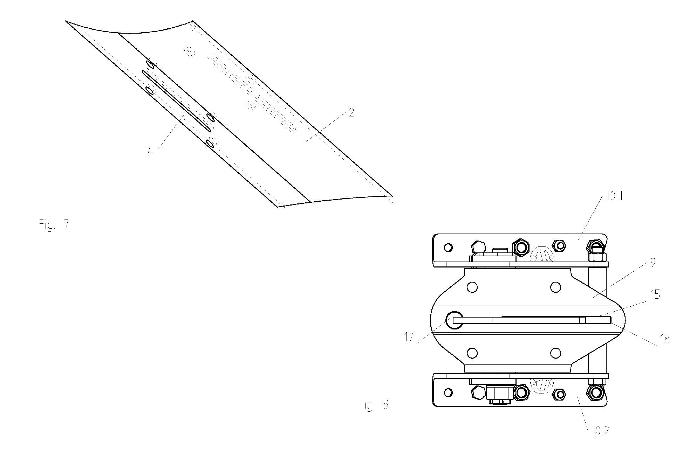

Dazu ist ein Hebel 13 vorgesehen, der eine Ausnehmung 14 (Fig. 7) durchsetzt. Des Weiteren ist in dem Pflugkörperhalteteil 9 ebenfalls eine Ausnehmung 15 vorgesehen, die von dem Hebel 13 ebenfalls durchsetzt ist. Wie aus Fig. 5 ersichtlich ist, ist der Hebel 13 gelenkig mit der Verstellstange 8 verbunden. Das Pflugkörperhalteteil 9 hat eine im Querschnitt im Wesentlichen U-förmige Gestalt und ist mit dem Pflugrahmenteil 2 verbunden, und zwar über Schrauben 16. Des Weiteren hat das Pflugkörperhalteteil 9 noch Vorsprünge 17 und 18, die in eine entsprechende Ausnehmung innerhalb des Pflugrahmens 2 und/oder die Ausnehmung 14 am Pflugrahmen 2 eingreifen, um ein Widerlager darzubieten, so dass das Pflugkörperhalteteil 9 nicht nur über die Schrauben 16 an dem Pflugrahmen 2 gesichert ist. Alternativ können auch am Pflugrahmen 2 entsprechende Vorsprünge vorgesehen sein, um in entsprechende Ausnehmungen am Pflugkörperhalteteil 9 einzugreifen.

In besonders vorteilhafter Weise ist der Hebel 13 beweglich mit der Bolzenhülseneinheit 2 und somit mit dem gegenüber den Pflugrahmen 2 verschwenkbaren Teil der Pflugkörperhalterung 7 verbunden, die durch die Konsolen 10.1 und 10.2 gebildet sind. Dazu ist der Hebel 13 an seiner der Gelenkstelle 19 an dem Verstellhebel 8 abgewandten Ende mit der im Wesentlichen horizontal ausgerichtete Achse 21 verbunden. Dieser Gelenkbolzen ist in einer Gelenkhülse angeordnet, die mit dem Bolzen/Hülsenteil 12 über einen Flansch 22 verbunden ist, so dass über den Hebel 13 die Verstellung der Konsolen 10.1 und 10.2 mitsamt der Gelenkbolzen-/Hülseneinheit 20 zu vollziehen ist, womit die Pflugscharreihen 4 und damit die Pflugarme 5 mit den die Pflugkörpern 6 zu verstellen sind.

Über die Achse 21 ist der Hebel 13 gegenüber der Pflugkörperhalterung 7 um die im Wesentlichen horizontal ausgerichtete Achse 23 beweglich und mithin auch gegenüber den die Pflugkörpern 6 tragenden Pflugarme 5. Gleichwohl ist der Hebel 13 innerhalb der Ausnehmung 14 bzw. der Ausnehmung 15 in dem Pflugkörperhalteteil 9 geführt, und zwar hinsichtlich der Anschläge, die sich links und rechts, bezogen auf die Darstellung nach Fig. 4 neben dem dargestellten Hebel 13 befinden, aber auch nach oben und unten, so dass die jeweilige Ausnehmung 14 am Pflugrahmen 2 bzw. die Ausnehmung 15 im Pflugkörperhalteteil 9 eine derartige Hocherstreckung hat, dass sich der Hebel 13 gegenüber der Pflugkörperhalterung 7 verschwenken und nach oben und unten bewegen lässt, jedoch nach einem bestimmten Schwenkweg nach oben und unten durch die jeweiligen Begrenzungswände der Ausnehmungen 14 und 15 auch wiederum Anschläge vorfindet, wodurch die Bewegung nach oben und unten hin begrenzt ist. So lassen sich Verspannungen in der beweglichen Verbindung zwischen dem Hebel 13 und der Pflugkörperhalterung 7 bzw. deren Teilen wirksam verhindern, was zu einem reparaturverminderten Betrieb des Drehpfluges führt.

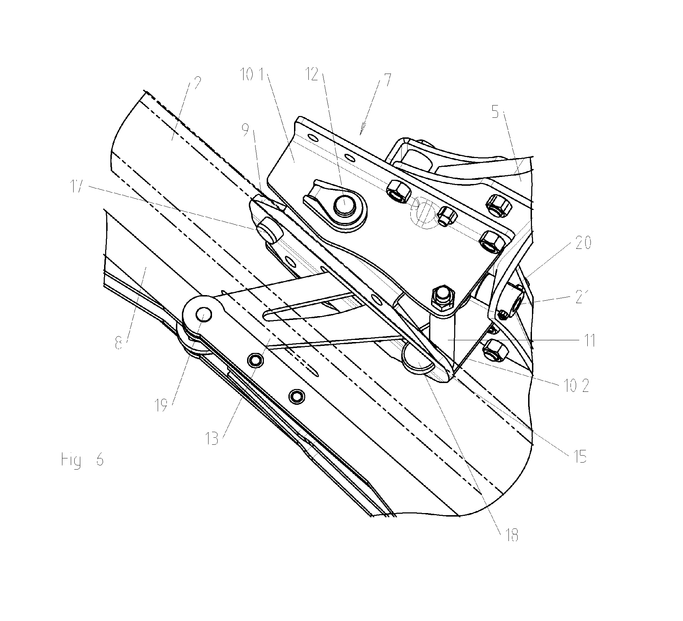

In den weiteren Darstellungen nach den Fig. 6, 7 und 8 sind die vorerwähnten Gestaltungsdetails in weiteren Ansichten noch näher dargestellt und mithin weiter verdeutlicht.

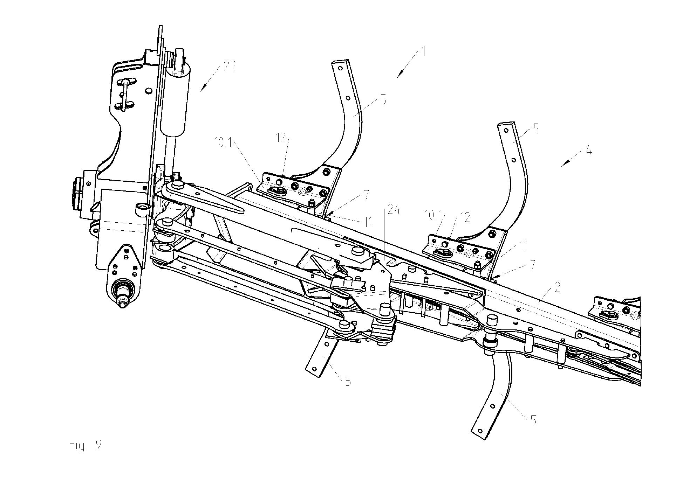

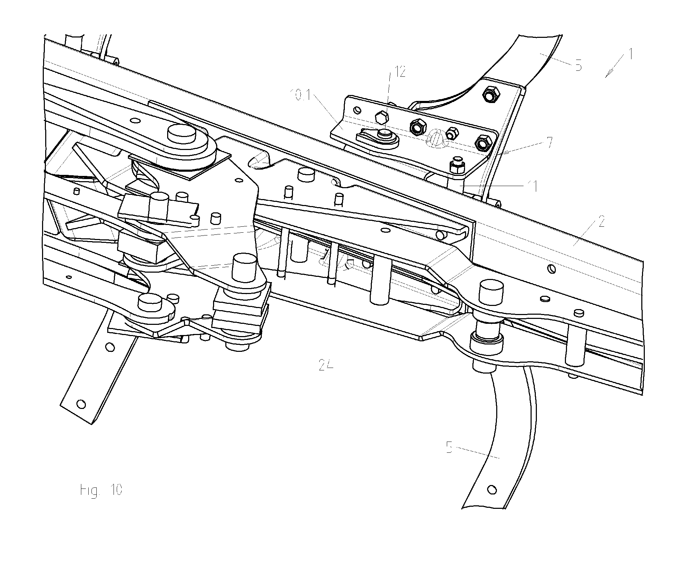

Neben den schon zuvor in den Figuren gezeigten Teilen der Pflugkörperhalterung 7 und der Pflugarme 5 der Pflugscharreihen 4 ist in den Fig. 9 bis 12 ein allgemein mit 23 bezifferter Anbaubock des Pfluges 1 gezeigt, der dazu dient, den Pflug 1 und damit den Pflugrahmen 2 mit einem landwirtschaftlichen Nutzfahrzeug, beispielsweise einem landwirtschaftlichen Schlepper, zu verbinden und dort z.B. einen Zapfwellenantrieb für die entsprechenden Dreh- und sonstigen Einstellungsbewegungen des Pfluges 1 anzubinden.

Der besseren Übersichtlichkeit wegen ist auf die nähere Gestaltung des Anbaubockes 23 an dieser Stelle verzichtet worden. Dieser soll jedoch technische Details aufweisen, die im Stand der Technik bekannt sind und mithin zahlreiche Vorbilder hat.

Wesentlich im Rahmen der vorliegenden Erfindung ist, dass dieser Anbaubock 23 ein Halterungsteil 24 hat, das auch wiederum an einer Seitenwandung des Pflugrahmens 2 angeflanscht ist, so dass die Ober- und Unterseite des als Vierkantrahmen ausgebildeten Pflugrahmens 2 frei von Anbauteilen auch von Verbindungsteilen des Pflugrahmens 2 ausgebildet ist. Da bereits die Pflughalterung 7 ebenfalls an einer Seitenwandung des Pflugrahmens 2 angebunden sind, ist somit insgesamt der Pflugrahmen 2 an seiner Ober- und an seiner Unterseite frei von jedweden Funktionsteilanbindungen, so dass etwaige dadurch bedingte und im Stand der Technik auftretende Verschmutzungen und Verstopfungsrisiken vermieden sind.

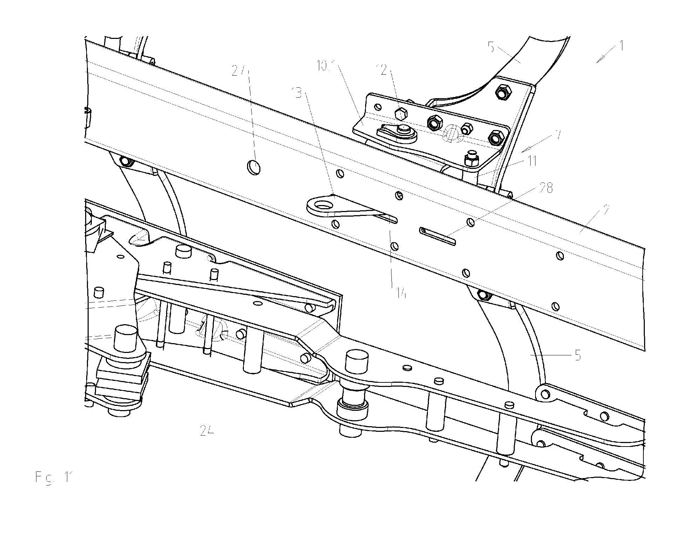

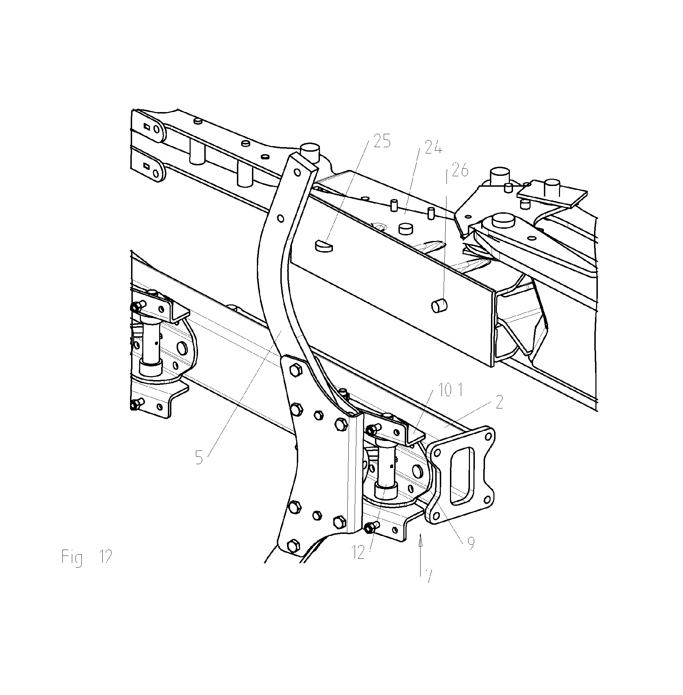

Das Halterungsteil 24 ist seinerseits mit einem oder mehreren Vorsprüngen bzw. Ansatzelementen 25 und 26 (Fig. 12) versehen, die in entsprechende Ausnehmungen 27 und 28 (Fig. 11) eingreifen können. Darüber hinaus ist das Halterungsteil 24 nach entsprechender Einführung der Vorsprünge 25 und 26 in die Ausnehmungen 27 und 28 am Pflugrahmen 28 über Schraubverbindungen oder dergleichen mit dem Pflugrahmen 2 verspannt. Durch die Ansatzelemente 25 und 26 lassen sich die entsprechenden Befestigungsverbindungen, also in aller Regel die Schraubverbindungen, wirksam entlasten.

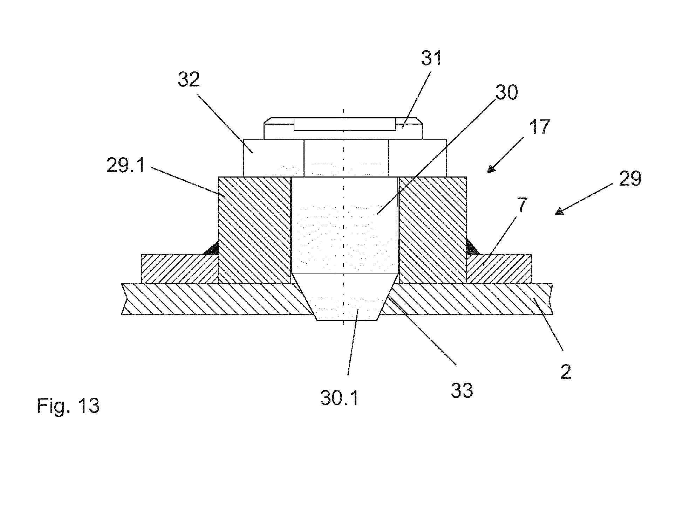

In Fig. 13 ist exemplarisch ein besonders gestaltetes Ansatzelement 29 gezeigt, das beispielsweise an dem Halterungsteil 24 oder aber auch an dem Pflugkörperhalteteil 27, vorgesehen sein kann. Exemplarisch ist dies dargestellt an dem Pflugkörperhalteteil 7. Das Pflugkörperhalteteil 7 ist mit Pflugrahmen 2 verbunden. Das Ansatzelement 29, das dem Ansatzelement 17 der Fig. 6 und 8 entsprechen soll, hat ein Buchsenteil 29.1, das ein Innengewinde aufweist, in das ein Schraubelement 30 mit einem Konusende 30.1 eingeschraubt ist, mit einem Fixierkonus 31 und einer Mutter 32. Somit ist das Schraubelement 30 lageveränderlich in der Ausnehmung 33 des Pflugrahmens gehalten, so dass der Vorsprung 29 bzw. 17 den individuellen Fertigungs- und Montageanforderungen durch eine Lageveränderung des Vorsprunges 30 individuell angepasst werden kann. So ist auch eine Vormontage und auch eine Endsicherung des Vorsprunges 17 bzw. 29 ermöglicht.

## Patentansprüche

1. Drehpflug (1) mit einem an einem Anbaubock zur Verbindung des Drehpfluges (1) mit einem landwirtschaftlichen Zugfahrzeug dreh- und/oder schwenkbar befestigbaren Pflugrahmen (2) und mit auf gegenüberliegenden Seiten des Pflugrahmens (2) angeordneten Pflugscharreihen (4, 5) mit Pflugkörpern (6), wobei durch eine über eine Antriebsvorrichtung eingeleitete Drehbewegung des Pflugrahmens (2) wahlweise die eine oder die andere Pflugscharreihe (4, 5) in ihre Betriebsstellung oder in ihre Außerbetriebsstellung überführbar ist und wobei die Pflugkörper (6) über Pflugkörperhalterungen (7) an dem Pflugrahmen befestigt sind, wobei Halterungen von Funktionsteilen wie die Pflugkörperhalterung (7) und/oder das Halterungsteil (24) des Anbaubockes (23) mit einem Ansatzelement (17, 18, 25, 26) versehen sind, das in eine Ausnehmung einsetzbar ist, wobei das Ansatzelement (17, 18, 25, 26, 29) ein bewegbares, in die Ausnehmung einführbares Verbindungsglied aufweist, **dadurch gekennzeichnet, dass** das Halteteil (24) und/oder der Pflugrahmen (2) zumindest ein Ansatzelement (17, 18, 25, 26, 29) aufweist, das formschlüssig in eine komplementär ausgebildete Ausnehmung (27, 28, 33) des Pflugrahmens (2) bzw. des Halteteils (24) eingreift.

2. Drehpflug nach Anspruch 1, **dadurch gekennzeichnet, dass** das Ansatzelement (29) ein Buchsenteil (29.1) aufweist mit einem Innengewinde, in das ein Schraubelement (30) einschraubbar ist.

3. Drehpflug nach Anspruch 2, **dadurch gekennzeichnet, dass** das Schraubelement (30) eines Endes ein Konusende (30.1) aufweist.

4. Drehpflug nach einem der Ansprüche 2 bis 3, **dadurch gekennzeichnet, dass** das Schraubelement (30) über einen Fixierkonus (31) und eine Mutter (32) mit dem Buchsenteil (29.1) verschraubbar ist.

5. Drehpflug nach einem der Ansprüche 1 bis 4, **dadurch gekennzeichnet, dass** der Anbaubock (23) über ein Halteteil (24) nur an einer Seitenwand oder nur an zwei Seitenwänden des Pflugrahmens (2) in Bezug auf seine Arbeitsstellung befestigt ist.

6. Drehpflug nach einem der Anspruch 1 bis 5, **dadurch gekennzeichnet, dass** das Halteteil (24) des Anbaubockes (23) mit einer Seitenwand oder zwei Seitenwänden des Pflugrahmens (2) verschraubt ist.

7. Drehpflug nach einem der Ansprüche 1 bis 6, **dadurch gekennzeichnet, dass** zumindest zwei mit Abstand zueinander vorgesehene Ansatzelemente (25, 26) an dem Halteteil (24) und/oder an dem Pflugrahmen (2) vorgesehen sind, die in den Ansatzelementen (25, 26) zugeordnete Ausnehmungen (27, 28) an dem Pflugrahmen (2) und/oder an dem Halteteil (24) formschlüssig eingreifen.

8. Drehpflug nach einem der Ansprüche 1 bis 7, **dadurch gekennzeichnet, dass** zumindest ein Ansatzelement (25, 26) und die diesem zugeordnete Ausnehmung ein Widerlager für das Halteteil (24) ausbildet und zusätzlich zu dem Widerlager ein im Pflugrahmen eingreifendes Befestigungselement vorgesehen ist.

9. Drehpflug nach Anspruch 8, **dadurch gekennzeichnet, dass** das zusätzlich zum Ansatzelement (25, 26) vorgesehene Befestigungselement durch zumindest eine Schraubverbindung gebildet wird.

10. Drehpflug nach einem der Ansprüche 1 bis 9, **dadurch gekennzeichnet, dass** ein Ansatzelement (29) ein bewegliches Teil (30) aufweist, das lageveränderlich in der Ausnehmung des Pflugrahmens (2) und/oder des Halteteils (24) festlegbar ist.

11. Drehpflug nach einem der Ansprüche 1 bis 10, **dadurch gekennzeichnet, dass** die Pflugkörperhalterung (7) eines Pflugkörpers (6) nur an einer Seitenwand oder nur an zwei Seitenwänden des Pflugrahmens (2) in Bezug auf seine Arbeitsstellung befestigt ist.

12. Drehpflug nach Anspruch 11, **dadurch gekennzeichnet, dass** die Pflugkörperhalterung (7) mit einer Seitenwand oder zwei Seitenwänden des Pflugrahmens (2) verschraubt ist.

13. Drehpflug nach einem der Ansprüche 1 bis 12, **dadurch gekennzeichnet, dass** die Pflugkörperhalterung (7) und/oder der Pflugrahmen (2) zumindest ein Ansatzelement (17, 18) aufweist, das formschlüssig in eine komplementär ausgebildete Ausnehmung des Pflugrahmens (2) bzw. der Pflugkörperhalterung (7) eingreift.

14. Drehpflug nach einem der Ansprüche 1 bis 13, **dadurch gekennzeichnet, dass** zumindest zwei mit Abstand zueinander vorgesehene Ansatzelemente (17, 18) an der Pflugkörperhalterung (7) und/oder an dem Pflugrahmen (2) vorgesehen sind, die in den Ansatzelementen (17) zugeordnete Ausnehmungen an dem Pflugrahmen (2) und/oder an der Pflugkörperhalterung (7) formschlüssig eingreifen.

15. Drehpflug nach Anspruch 13, **dadurch gekennzeichnet, dass** das zumindest ein Ansatzelement (17, 18) und die diesem zugeordnete Ausnehmung ein Widerlager für die Pflugkörperhalterung (7) ausbildet und zusätzlich zu dem Widerlager ein in den Pflugrahmen (2) eingreifendes Befestigungselement (16) vorgesehen ist.

16. Drehpflug nach Anspruch 15, **dadurch gekennzeichnet, dass** das zusätzlich zum Ansatzelement (17, 18) vorgesehene Befestigungselement (16) durch eine Schraubverbindung gebildet wird.

17. Drehpflug nach einem der Ansprüche 1 bis 16 mit einer Vorrichtung zur Einstellung der Pflugarbeitsbreite in den jeweiligen Arbeitsstellungen, wobei die Pflugkörper (6) zur Einstellung der Pflugarbeitsbreite um eine im Wesentlichen lotrechte Achse schwenkbar am Pflugrahmen (2) und jeweils über einen eine Ausnehmung (14) des Pflugrahmens (2) durchsetzenden Hebel (13) verstellbar sind, **dadurch gekennzeichnet, dass** der die Ausnehmung (14) des Pflugrahmens (2) durchsetzende Hebel (13) beweglich mit zumindest einem Teil (10.1, 10.2) der Pflugkörperhalterung (7) verbunden ist.

18. Drehpflug nach Anspruch 17, **dadurch gekennzeichnet, dass** der Hebel um eine in der Arbeitsstellung des Pflugkörpers (6) im Wesentlichen horizontal ausgerichtete Achse (21) schwenkbar mit zumindest einem Teil (10.1, 10.2) der Pflugkörperhalterung (7) verbunden ist.

19. Drehpflug nach einem der Ansprüche 17 bis 18, **dadurch gekennzeichnet, dass** der die Ausnehmung (14) des Pflugrahmens (2) durchsetzende Hebel (13) um eine Achse (21) schwenkbar ist, die parallel oder annähernd parallel zu einer Seitenwandung des Pflugrahmens (2) ausgerichtet ist.

20. Drehpflug nach einem der Ansprüche 17 bis 19, **dadurch gekennzeichnet, dass** der Hebel (13) über einen die Achse (21) zwischen dem Hebel (13) und der Pflugkörperhalterung (7) aufweisenden Gelenkbolzen (20) mit der Pflugkörperhalterung (7) verbunden ist.

21. Drehpflug nach einem der Ansprüche 17 bis 20, **dadurch gekennzeichnet, dass** die Ausnehmung (14) innerhalb des Pflugrahmens (2) zur Anordnung des Hebels (13) eine die Bewegung des Hebels (13) um die in etwa horizontal ausgerichtete Achse (21) zulassende Hocherstreckung aufweist.

22. Drehpflug nach einem der Ansprüche 17 bis 21, **dadurch gekennzeichnet, dass** der die Ausnehmung (14) durchsetzende Hebel (13) mitsamt der Schwenkachse (21) derart mit der Pflugkörperhalterung (7) verbunden ist, dass die Achse (21) bei Einstellung der Pflugarbeitsbreite in der jeweiligen Arbeitsstellung eine Schwenkbewegung zumindest eines Teils der Pflugkörperhalterung (7) um die lotrechte Achse mitmacht.

23. Drehpflug nach einem der Ansprüche 17 bis 22, **dadurch gekennzeichnet, dass** die Pflugkörperhalterung (7) zwei mit Abstand zueinander angeordnete Konsolen (10.1, 10.2) aufweist, zwischen denen eine Hülse (12) mit Gelenkbolzen vorgesehen ist, die die lotrechte Achse zur Einstellung der Arbeitsbreite ausbilden, wobei ein Befestigungsteil (22) mit der Hülse (12) verbunden ist, an denen der Hebel (13) mit der im Wesentlichen horizontal ausgerichteten Achse (21) angreift.

24. Drehpflug nach Anspruch 23, **dadurch gekennzeichnet, dass** an den beiden mit Abstand zueinander angeordneten Konsolen (10.1, 10.2) der Pflugkörperhalterung (7) der Pflugkörper (6) abgestützt ist.

25. Drehpflug nach Anspruch 24, **dadurch gekennzeichnet, dass** die beiden mit Abstand zueinander angeordneten Konsolen (10.1, 10.2) an einem Pflugkörperhalteteil (9) befestigt sind, das mit dem Pflugrahmen (2) verbunden ist.

## Claims

1. Reversible plough (1) with a plough frame (2) which is fastenable rotatably and/or pivotably to a headstock for connecting the reversible plough (1) to an agricultural tractor, and with rows of ploughshares (4, 5) which are arranged on opposite sides of the plough frame (2) and have plough bodies (6), wherein, by means of a rotational movement of the plough frame (2) initiated via a driving device, either the one or the other row of ploughshares (4, 5) is transferable into the operating position thereof or into the non-operating position thereof, and wherein the plough bodies (6) are fastened to the plough frame via plough body holders (7), **wherein** holders of functional parts, such as the plough body holder (7) and/or the holding part (24) of the headstock (23), are provided with an extension element (17, 18, 25, 26) which is insertable into a recess, wherein the extension element (17, 18, 25, 26, 29) has a moveable connecting member which is insertable into the recess, **characterized in that** the holding part (24) and/or the plough frame (2) has at least one extension element (17, 18, 25, 26, 29) which engages in a form-fitting manner in a complementarily formed recess (27, 28, 33) of the plough frame (2) and/or of the holding part (24).

2. Reversible plough according to Claim 1, **characterized in that** the extension element (29) has a bushing part (29.1) with an internal thread into which a screw element (30) is screwable.

3. Reversible plough according to Claim 2, **characterized in that** the screw element (30) has a conical end (30.1) at one end.

4. Reversible plough according to either of Claims 2 and 3, **characterized in that** the screw element (30) is screwable to the bushing part (29.1) via a fixing cone (31) and a nut (32).

5. Reversible plough according to one of Claims 1 to 4, **characterized in that** the headstock (23) is fastened via a holding part (24) only to one side wall or only to two side walls of the plough frame (2) with respect to the working position thereof.

6. Reversible plough according to one of Claims 1 to 5, **characterized in that** the holding part (24) of the headstock (23) is screwed to one side wall or two side walls of the plough frame (2).

7. Reversible plough according to one of Claims 1 to 6, **characterized in that** at least two extension elements (25, 26) which are provided at a distance from each other are provided on the holding part (24) and/or on the plough frame (2), said extension elements engaging in a form-fitting manner in recesses (27, 28), which are assigned to the extension elements (25, 26), on the plough frame (2) and/or on the holding part (24).

8. Reversible plough according to one of Claims 1 to 7, **characterized in that** at least one extension element (25, 26) and the recess assigned to the latter form an abutment for the holding part (24) and, in addition to the abutment, a fastening element engaging in the plough frame is provided.

9. Reversible plough according to Claim 8, **characterized in that** the fastening element provided in addition to the extension element (25, 26) is formed by at least one screw connection.

10. Reversible plough according to one of Claims 1 to 9, **characterized in that** one extension element (29) has a moveable part (30) which is securable in a position-variable manner in the recess of the plough frame (2) and/or of the holding part (24).

11. Reversible plough according to one of Claims 1 to 10, **characterized in that** the plough body holder (7) of a plough body (6) is fastened only to one side wall or only to two side walls of the plough frame (2) with respect to the working position thereof.

12. Reversible plough according to Claim 11, **characterized in that** the plough body holder (7) is screwed to one side wall or two side walls of the plough frame (2).

13. Reversible plough according to one of Claims 1 to 12, **characterized in that** the plough body holder (7) and/or the plough frame (2) has at least one extension element (17, 18) which engages in a form-fitting manner in a complementarily designed recess of the plough frame (2) and/or of the plough body holder (7).

14. Reversible plough according to one of Claims 1 to 13, **characterized in that** at least two extension elements (17, 18) provided at a distance from each other are provided on the plough body holder (7) and/or on the plough frame (2), which extension elements engage in a form-fitting manner in recesses, which are assigned to the extension elements (17), on the plough frame (2) and/or the plough body holder (7).

15. Reversible plough according to Claim 13, **characterized in that** the at least one extension element (17, 18) and the recess assigned to the latter form an abutment for the plough body holder (7) and, in addition to the abutment, a fastening element (16) engaging in the plough frame (2) is provided.

16. Reversible plough according to Claim 15, **characterized in that** the fastening element (16) provided in addition to the extension element (17, 18) is formed by a screw connection.

17. Reversible plough according to one of Claims 1 to 16 with a device for setting the plough working width in the respective working positions, wherein, in order to set the plough working width, the plough bodies (6) are adjustable on the plough frame (2) in a manner pivotable about a substantially perpendicular axis and in each case via a lever (13) passing through a recess (14) of the plough frame (2), **characterized in that** the lever (13) passing through the recess (14) of the plough frame (2) is moveably connected to at least one part (10.1, 10.2) of the plough body holder (7).

18. Reversible plough according to Claim 17, **characterized in that** the lever is connected to at least one part (10.1, 10.2) of the plough body holder (7) in a manner pivotable about an axis (21) which is oriented substantially horizontally in the working position of the plough body (6).

19. Reversible plough according to either of Claims 17 and 18, **characterized in that** the lever (13) passing through the recess (14) of the plough frame (2) is pivotable about an axis (21) which is oriented parallel or approximately parallel to a side wall of the plough frame (2).

20. Reversible plough according to one of Claims 17 to 19, **characterized in that** the lever (13) is connected to the plough body holder (7) via a hinge pin (20) having the axis (21) between the lever (13) and the plough body holder (7).

21. Reversible plough according to one of Claims 17 to 20, **characterized in that**, for the arrangement of the lever (13), the recess (14) within the plough frame (2) has a vertical extent permitting the movement of the lever (13) about the approximately horizontally oriented axis (21).

22. Reversible plough according to one of Claims 17 to 21, **characterized in that** the lever (13) passing through the recess (14) is connected together with the pivot axis (21) to the plough body holder (7) in such a manner that, when the plough working width is set in the respective working position, the axis (21) participates in a pivoting movement of at least one part of the plough body holder (7) about the perpendicular axis.

23. Reversible plough according to one of Claims 17 to 22, **characterized in that** the plough body holder (7) has two brackets (10.1, 10.2) which are arranged at a distance from each other and between which a sleeve (12) having hinge pins is provided, the hinge pins forming the perpendicular axis for setting the working width, wherein a fastening part (22) is connected to the sleeve (12), on which the lever (13) with the substantially horizontally oriented axis (21) acts.

24. Reversible plough according to Claim 23, **characterized in that** the plough body (6) is supported on the two brackets (10.1, 10.2), which are arranged at a distance from each other, of the plough body holder (7).

25. Reversible plough according to Claim 24, **characterized in that** the two brackets (10.1, 10.2) arranged at a distance from each other are fastened to a plough body holding part (9) which is connected to the plough frame (2).

## Revendications

1. Charrue brabant (1) avec un cadre de charrue (2) pouvant être fixé de manière à pouvoir tourner et/ou pivoter à un support de montage pour raccorder la charrue brabant (1) à un tracteur agricole et avec des rangées de socs de charrue (4, 5) avec des corps de charrue (6) disposées sur des côtés opposés du cadre de charrue (2), pour laquelle par l'intermédiaire d'un mouvement de rotation du cadre de charrue (2) initié par un dispositif d'entraînement, l'une ou l'autre des rangées de socs de charrue (4, 5) peut être transférée au choix dans sa position de fonctionnement ou dans sa position de non fonctionnement et pour laquelle les corps de charrue (6) sont fixés au cadre de charrue par des fixations de corps de charrue (7), pour laquelle les fixations des pièces fonctionnelles comme la fixation de corps de charrue (7) et/ou la pièce de fixation (24) du support de montage (23) sont munies d'un élément d'extension (17, 18, 25, 26) pouvant être introduit dans un évidement, l'élément d'extension (17, 18, 25, 26, 29) comportant un organe de liaison mobile pouvant être introduit dans l'évidement, **caractérisée en ce que** la pièce de fixation (24) et/ou le cadre de charrue (2) comportent au moins un élément d'extension (17, 18, 25, 26, 29) qui vient en prise par complémentarité de forme dans un évidement (27, 28, 33) constitué de manière complémentaire du cadre de charrue (2) ou de la pièce de fixation (24).

2. Charrue brabant selon la revendication 1 **caractérisée en ce que** l'élément d'extension (29) comporte une pièce à douille (29.1) avec un filetage intérieur dans lequel un élément à vis (30) peut être vissé.

3. Charrue brabant selon la revendication 2 **caractérisée en ce que** l'élément à vis (30) d'une extrémité comporte une extrémité conique (30.1).

4. Charrue brabant selon l'une quelconque des revendications 2 à 3 **caractérisée en ce que** l'élément à vis (30) peut être vissé par l'intermédiaire d'un cône de fixation (31) et d'un écrou (32) à la pièce à douille (29.1).

5. Charrue brabant selon l'une quelconque des revendications 1 à 4 **caractérisée en ce que** le support de montage (23) est fixé par une pièce de fixation (24) uniquement à une paroi latérale ou uniquement à deux parois latérales du cadre de charrue (2) par rapport à sa position de travail.

6. Charrue brabant selon l'une quelconque des revendications 1 à 5 **caractérisée en ce que** la pièce de fixation (24) du support de montage (23) est vissée à une paroi latérale ou à deux parois latérales du cadre de charrue (2).

7. Charrue brabant selon l'une quelconque des revendications 1 à 6 **caractérisée en ce qu'**au moins deux éléments d'extension (25, 26) prévus à distance l'un de l'autre sont prévus sur la pièce de fixation (24) et/ou sur le cadre de charrue (2), qui viennent en prise par complémentarité de forme dans des évidements (27, 28) attribués aux éléments d'extension (25, 26) sur le cadre de charrue (2) et/ou sur la pièce de fixation (24).

8. Charrue brabant selon l'une quelconque des revendications 1 à 7 **caractérisée en ce qu'**au moins un élément d'extension (25, 26) et l'évidement attribué à celui-ci constituent un contre-appui pour la pièce de fixation (24) et en plus du contre-appui un élément de fixation est prévu, venant en prise dans le cadre de charrue.

9. Charrue brabant selon la revendication 8 **caractérisée en ce que** l'élément de fixation prévu en plus de l'élément d'extension (25, 26) est formé par au moins un raccord à vis.

10. Charrue brabant selon l'une quelconque des revendications 1 à 9 **caractérisée en ce qu'**un élément d'extension (29) comporte une pièce mobile (30) qui peut être fixée de manière à pouvoir changer de position dans l'évidement du cadre de charrue (2) et/ou de la pièce de fixation (24).

11. Charrue brabant selon l'une quelconque des revendications 1 à 10 **caractérisée en ce que** la fixation de corps de charrue (7) d'un corps de charrue (6) est fixée uniquement à une paroi latérale ou uniquement à deux parois latérales du cadre de charrue (2) par rapport à sa position de travail.

12. Charrue brabant selon la revendication 11 **caractérisée en ce que** la fixation de corps de charrue (7) est vissée à une paroi latérale ou à deux parois latérales du cadre de charrue (2).

13. Charrue brabant selon l'une quelconque des revendications 1 à 12 **caractérisée en ce que** la fixation de corps de charrue (7) et/ou le cadre de charrue (2) comportent au moins un élément d'extension (17, 18) qui vient en prise par complémentarité de forme dans un évidement constitué de manière complémentaire du cadre de charrue (2) ou de la fixation de corps de charrue (7).

14. Charrue brabant selon l'une des revendications 1 à 13 **caractérisée en ce qu'**au moins deux éléments d'extension (17, 18) prévus à distance l'un de l'autre sont prévus sur la fixation de corps de charrue (7) et/ou sur le cadre de charrue (2), qui viennent en prise par complémentarité de forme dans des évidements attribués aux éléments d'extension (17) sur le cadre de charrue (2) et/ou sur la fixation de corps de charrue (7).

15. Charrue brabant selon la revendication 13 **caractérisée en ce qu'**au moins un élément d'extension (17, 18) et l'évidement attribué à celui-ci constituent un contre-appui pour la fixation de corps de charrue (7) et en plus du contre-appui un élément de fixation (16) est prévu, venant en prise dans le cadre de charrue (2).

16. Charrue brabant selon la revendication 15 **caractérisée en ce que** l'élément de fixation (16) prévu en plus de l'élément d'extension (17, 18) est formé par un raccord à vis.

17. Charrue brabant selon l'une quelconque des revendications 1 à 16 avec un dispositif pour régler la largeur de travail de la charrue dans les positions de travail respectives, pour laquelle les corps de charrue (6) peuvent pivoter sur le cadre de charrue (2) autour d'un axe pour l'essentiel vertical pour le réglage de la largeur de travail de la charrue et peuvent être respectivement réglés par un levier (13) traversant un évidement (14) du cadre de charrue (2) **caractérisée en ce que** le levier (13) traversant l'évidement (14) du cadre de charrue (2) est raccordé de façon mobile avec au moins une partie (10.1, 10.2) de la fixation de corps de charrue (7).

18. Charrue brabant selon la revendication 17 **caractérisée en ce que** le levier est raccordé, de manière à pouvoir pivoter autour d'un axe (21) orienté pour l'essentiel horizontalement dans la position de travail du corps de charrue (6), à au moins une partie (10.1, 10.2) de la fixation de corps de charrue (7).

19. Charrue brabant selon l'une quelconque des revendications 17 à 18 **caractérisée en ce que** le levier (13) traversant l'évidement (14) du cadre de charrue (2) peut pivoter autour d'un axe (21), qui est orienté parallèlement ou presque parallèlement à une cloison latérale du cadre de charrue (2).

20. Charrue brabant selon l'une quelconque des revendications 17 à 19 **caractérisée en ce que** le levier (13) est raccordé à la fixation de corps de charrue (7) par un boulon articulé (20) comportant l'axe (21) entre le levier (13) et la fixation de corps de charrue (7).

21. Charrue brabant selon l'une quelconque des revendications 17 à 20 **caractérisée en ce que** l'évidement (14) à l'intérieur du cadre de charrue (2) comporte pour le montage du levier (13) une extension en hauteur permettant le mouvement du levier (13) autour de l'axe (21) orienté à peu près horizontalement.

22. Charrue brabant selon l'une quelconque des revendications 17 à 21 **caractérisée en ce que** le levier (13) traversant l'évidement (14) avec l'axe de pivotement (21) est raccordé de telle manière à la fixation de corps de charrue (7) que l'axe (21) suit, lors du réglage de la largeur de travail de charrue dans la position de travail respective, un mouvement de pivotement au moins d'une partie de la fixation de corps de charrue (7) autour de l'axe vertical.

23. Charrue brabant selon l'une quelconque des revendications 17 à 22 **caractérisée en ce que** la fixation de corps de charrue (7) comporte deux consoles (10.1, 10.2) disposées à distance l'une de l'autre entre lesquelles est prévu un manchon (12) avec boulon d'articulation qui constituent l'axe vertical pour le réglage de la largeur de travail, pour laquelle une pièce de fixation (22) est raccordée au manchon (12), sur lesquels vient en prise le levier (13) avec l'axe (21) orienté pour l'essentiel horizontalement.

24. Charrue brabant selon la revendication 23 **caractérisée en ce que** le corps de charrue (6) est appuyé sur les deux consoles (10.1, 10.2) de la fixation de corps de charrue (7), disposées à distance l'une de l'autre.

25. Charrue brabant selon la revendication 24 **caractérisée en ce que** les deux consoles (10.1, 10.2) disposées à distance l'une de l'autre sont fixées à une pièce de fixation de corps de charrue (9) qui est raccordée au cadre de charrue (2).
